# EUROPEAN PATENT SPECIFICATION

(11) **EP 0 938 222 B1**
(45) Date of publication and mention of the grant of the patent: **28.04.2010**
(21) Application number: 99103212.9
(22) Date of filing: 18.02.1999
(51) Int. Cl.: H04M 1/72, H04M 1/65

(54) **Mobile radio telephone and method for operating the same**
Verfahren zum Betrieb eines Mobiltelefons und Mobiltelefon
Téléphone mobile et méthode d'exploitation de celui ci

(30) Priority: 18.02.1998 KR 9805029
(43) Date of publication of application: 25.08.1999
(60) Divisional application: 09006552.5
(73) Proprietor: SAMSUNG ELECTRONICS CO., LTD., Suwon-City, Kyungki-do (KR)
(72) Inventor: Kim, Yun-Hyang, Kumi-shi, Kyongsangbuk-do (KR)
(74) Representative: Grünecker, Kinkeldey, Stockmair & Schwanhäusser Anwaltssozietät

(56) References cited:
- EP-A- 0 725 499
- EP-A- 0 762 711
- US-A- 5 689 511

## Description

The present invention relates generally to a mobile radio telephone and related method and in particular to the mobile radio telephone and method capable of recording and reproducing, received frame data of voice channels having a variable data rate depending on the voice traffic per unit time.

In general, a digital mobile communication system has many advantages in light of the efficiency of frequency utilization and the superiority in speech quality in comparison with an analog system. For example, the digital mobile communication system can be divided into a GSM (Global Systems for Mobile Communication) system and a CDMA (Code Division Multiple Access) system. Especially, an IS - 95 (Interim Standard - 95) DS/CDMA system was adopted in both Korea and U.S.A. and applied to a PCS (Personal Communication System) as well as the digital mobile radio communication system.

In a mobile radio communication system employing the IS - 95 CDMA system, a transmitter encodes voice data by using a vocoder (i.e., a voice coder and decoder) and then converts the encoded data into a frame format having a plurality of data rates. A data transmission section prescribed in the IS - 95 standard encodes voice data outputted from the vocoder and converts the encoded data into voice frames having a plurality of data rates. For example, the vocoder in a transmission section of IS - 95 DS/CDMA system changes the data rate of the voice signal to one of the following data rates according to the voice traffic per unit time: full rate, 1/2 rate, 1/4 rate, and 1/8 rate. Here, the frame format of the voice data has a length of 20 ms irrespective of variation of the data rate. The vocoder of the transmission party selects the data rate on the basis of the mobility of a voice signal. In a forward traffic channel, the base station transmits frame data by repeating data in accordance with the variable data rate.

A mobile radio telephone employing the IS - 96 DS/CDMA system is manufactured and on sale by a plurality of communication equipment manufactures such as QUALCOMM and MOTOROLA, Samsung and so on.

The mobile radio telephone employing the DS/CDMA system upon receiving data of the forward traffic channel should detect a frame data rate for a current voice channel by detecting a format byte within the frame data of the voice channel. Also, the mobile radio telephone having the aforesaid function decodes an encoded voice data depending on the data rate information included in the detected format byte. Here, encoding and decoding for voice data are performed by the vocoder of the mobile radio telephone and the vocoder decodes the information of data packets within the received frame data to PCM (Pulse Code Modulation) voice samples in accordance with an algorithm of QCELP (QUALCOMM Codebook Excited Linear Prediction). The voice data which is decoded as the PCM voice sample by the vocoder is reproduced as an analog voice by a PCM codec and is converted into an audible signal by a speaker.

However, the general mobile radio telephone including a cellular phone for digital processing the voice signal processes either the voice signal of the forward traffic channel or the voice signal of a reverse traffic channel. That is, a conventional mobile radio telephone has a communication function with the other party, but does not have a memo function so that the conventional mobile radio telephone is inconvenient e.g. in case that a telephone number is informed from the other party, since the user has to write the telephone number on a sheet of paper.

EP-A-O 762 711 relates to a cellular telephone having transmit and receive channels and including a memory and switching circuitry operative under control of a microcontroller. The telephone is capable of communicating in an analog or a digital mode of communication. By entry of commands to the microcontroller, the microcontroller arranges the configuration of the switching circuitry to permit storage in the memory of a message originating locally from a user of the telephone inputted via a microphone connected to the transmit channel or from a distant telephone connected via a communication link to the receiving channel. Playback may be accomplished by way of expansion circuitry of the received channel. An address unit which includes control circuitry for the memory applies address signals to the memory under command of the microcontroller, for storing the various speech messages at desired locations within the memory, and for reading out stored speech and any other form of message or data which may be stored within the memory. The vocoder of the telephone may be operative to provide for signal compression and decompression in accordance with the well-known CDMA or TDMA protocols.

EP-A-O 725 499 relates to a transmitting and receiving apparatus for speech signals employing a radio telephone network such as a car telephone set or portable telephone set. Signals received by the antenna are subjected to reception processing, demodulation and channel decoding by an RF reception processor, and expanded and decoded by a speech decoder. A recording/reproduction controller controls the writing of the signals from the speech encoder into a semiconductor memory and the readout of the signals from the memory to the speech decoder. The semiconductor memory records transmission/reception signals from the speech encoder and/or the speech decoder, and the recording/playback controller controls the semiconductor memory responsive to the transmitted and received signals. If a recording request signal is sent from the user of the portable telephone set via an external controller by corresponding key actuation, the recording controller is responsive to the recording request signal to set a flag specifying a unidirectional communication or a bidirectional communication at a preset position. The recording controller then accesses a recording routine. For recording both sides, the portable telephone set redoubles the write rate into the memory and effects recording by time-divisional multiplexing. By key actuation by the user, a user request signal is supplied via a control unit of the portable telephone set, such as an external controller, to a playback controller of the recording/playback controlling unit. The playback routine is then accessed.
TIA/EIA Interim Standard IS-127 "Enhanced Variable Rate Codec, Speech Service Option 3 for Wideband Spread Spectrum Digital Systems", pages 1-3, 2-1, 2-2, 5-1 and 5-2, January 1997 describes an enhanced variable rate codec (EVRC). The EVRC speech decoder receives and inputs the received speech packet and packet type indicator from the multiplex sub-layer. A frame error detection module uses the packet type indicator to determine the data rate and whether or not there was a frame error detected by the multiplex sub-layer. The rate decision and frame erasure flag are supplied by the frame error detection module to an RCELP decoder. The decoder uses the parameters contained in the received packet to re-synthesize the speech frame based on the rate decision. It uses the frame erasure flag to trigger frame error recovery logic. The raw synthesized speech is then post-filtered and output.

EP-A-0758168 discloses a CPMA system for variable-rate transmission, wherein the frame transmission rate is detected using "blind" detection, as well as using transmitted rate information.

It is the object of the present invention to provide a memo function applicable to systems in which frame data of a voice channel have variable data rates while saving storage space when storing the data needed for reproduction in the internal memory of the microprocessor.

This object is solved by the invention as defined by the independent claims. Embodiments of the invention are given in the dependent claims.

The invention is in particular advantageous in that it allows for a memo function in connection with voice messages transmitted from the other party via a forward traffic channel.

Further, the invention is advantageous in that it is applicable to systems in which frame data of a voice channel has a variable data rate depending on the voice traffic per unit time.

Preferred embodiments are defined by the dependent claims.

The invention will become more apparent by describing in detail a preferred embodiment thereof with reference to the attached drawings in which:
FIG. 1 is a block diagram which illustrates a construction of a mobile radio telephone according to an embodiment of the present invention;
FIG. 2 illustrates a frame structure of a communication channel in a mobile communication system;
FIG. 3 is a flow chart showing a procedure for recording frame data of the communication channel occupied according to an embodiment of the present invention;
FIG. 4 is a flow chart showing a procedure for decoding packet data within frame data of a communication channel as a voice signal according to an embodiment of the present invention;
FIGs. 5 shows a table of an internal memory 36 of the microprocessor illustrated in FIG. 1; and
FIG. 6 shows a table of flash memory 18 of FIG. 1.

Hereinafter, the detailed explanation for a preferred embodiment of the present invention will be given with reference to the attached drawings. In the following explanation, as one example, a mobile radio telephone employing a CDMA communication system will be given.

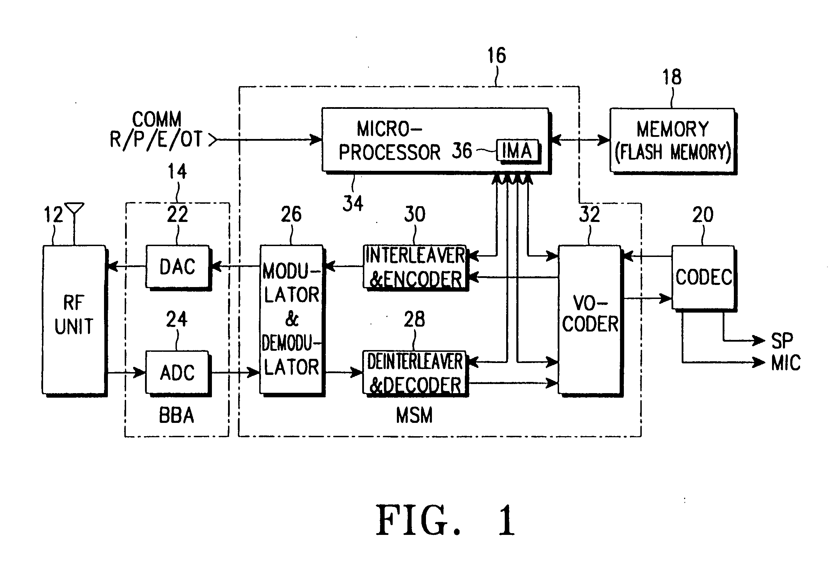

FIG. 1 is a block diagram showing a mobile radio telephone according to an embodiment of the present invention, wherein data of a forward traffic channel is recorded as a received voice signal in response to a recording command during receiving operation and in an idle mode, the recorded voice signal being reproduced in response to a reproducing command. The mobile radio telephone constructed according to FIG.1 is synchronized with and paged by data of a sync channel and a paging channel transmitted from a base station and then, receives the frame data of the forward traffic channel.

Referring to FIG. 1, if an RF (Radio Frequency) signal modulated in accordance with a CDMA system is received via an antenna, then as well known in the art, an RF unit 12 inputs the modulated RF signal, i.e., the down-converted intermediate signal (hereinafter referred to as an IF signal) to an ADC (Analog to Digital Converter) 24 which is disposed within the BBA (base band analog) circuit 14. Herein, the ADC 24 within the BBA circuit converts an analog signal into a digital signal to output the converted digital signal, and a DAC (Digital Analog Converter) 22 converts a digital signal into an analog signal. Additionally, the BBA circuit 14 can be embodied by using a chip, e.g. BBA2.X (Q5312 CDMA) manufactured by QUALCOMM of U.S.A.

A digital signal output from the ADC 24 is inputted to a MODEM (Modulator and Demodulator) 26 within a MSM (Mobile Station Modem) 16 as shown in FIG. 1. The MODEM 26 performs demodulation according to the CDMA system, and symbol-combines the inputted digital data to provide the data to a deinterleaver and decoder 28. The deinterleaver and decoder 28 deinterleaves and decodes the symbol-combined data to thereby output error corrected information bits.

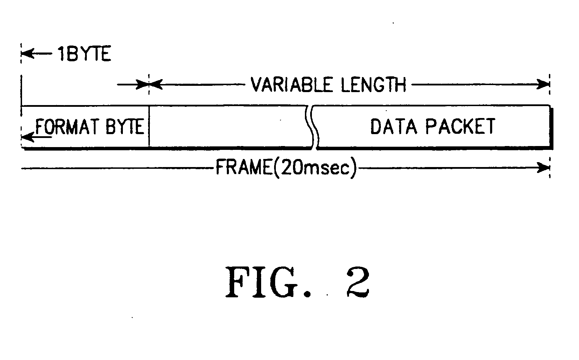

Herein, a microprocessor 34 within the MSM 16 of FIG.1 reads out the error corrected information bits obtained by the deinterleaver and decoder 28 in a 20 ms unit and detects a frame format. Then, the microprocessor 34 accesses data rate information and forwards the data rate information and the data packet to the vocoder 32. Herein, the reason why the MSM 16 accesses the deinterleaved and decoded information bits in a 20 ms unit is because a voice channel frame of the forward traffic channel employing the CDMA system is transmitted at the period of 20 ms. The frame data format of the voice channel is given in FIG.2.

FIG.2 illustrates a frame structure of a communication channel in a mobile communication system and more particularly, a voice frame data format of the forward traffic channel in the CDMA communication system. The frame format consists of a format byte having one byte and a data packet, the data size of which varies according to the voice traffic per unit time. Table 1 shows a data bit map for the frame format. In the table, the term "VOC" refers to a "vocoder" and the term "DEC" to "decoder".

**[ Table 1 ]**

| BITs | NAME | DESCRIPTION | |
|---|---|---|---|
| 7 | 13K_PACKET_DATA | This bit indicates the data rate of packet data inputted to the vocoder. 1 = 13 kpbs | |
| 6 | RESERVED | This bit is 0. | |
| 5 | LOAD_FIR | | |
| 4 | VOC_DEC_BAD_RX_DATA | | |
| 3 | VOC_DEC_ERASURE | This bit indicates an erasure frame. | |
| 2 | VOC_DEC_BLANK | This bit indicates a blank frame. | |
| 1:0 | VOC_DEC_RATE | Vocoder Rate (Data Rate) | |
| | | 00 = full rate | 01 = 1/2 rate |
| | | 10 = 1/4 rate | 11 = 1/8 rate |

Referring to FIG.2, the total period of the frame format of the voice channel is 20 ms. Herein, the format byte is fixedly one byte, and the data packet which refers to the data decoding rate for the vocoder of the transmission party has a variable length according to the voice traffic per unit time.

The microprocessor 34 detects the frame data format of the voice channel in a 20 ms unit as illustrated in FIG. 2 and forwards to the vocoder 32 the data rate of the lowest 2 bits (bits 1:0) included in the format byte and the packet data sequentially following the above format byte. Here, the data rate information (the lowest 2 bits) indicates the encoded bit rate of the packet data forwarded from the transmission party and records same on a vocoder decoder packet register (VOC_DEC_PACKET) positioned inside the vocoder 32 under control of the microprocessor 34. The vocoder 32 decodes the data packet inputted in accordance with the above data rate information of the vocoder decoder packet register (VOC_DEC_PACKET) to output the decoded data as a PCM (Pulse Code Modulation) voice data sample.

The PCM voice data sample output from the vocoder 32 is inputted to the PCM codec 20 (coder and decoder). The PCM codec 20 converts the PCM voice data sample outputted from the vocoder 32 into an analog voice signal. The analog voice signal is provided to a speaker SP in order to produce an audible sound.

On the other hand, the analog voice signal from a microphone MIC is converted to the PCM voice sample data in the PCM codec 20 positioned on the path of the reverse link traffic channel and then, in the vocoder 32, encoded at an appropriate data rate. The signal processing sequence of the reverse link traffic channel proceeds the other way round compared to that of the forward traffic channel as stated above. That is, the sequence of the reverse link traffic channel is as follows; the codec 20, the vocoder 32, an interleaver and encoder 30, the MODEM 26, the DAC 22 of the BBA 14 and RF unit 12.

The microprocessor 34 of the MSM 16 illustrated in FIG. 1 comprises a recording controller for recording the voice data of the forward traffic channel to a memory 18 according to a command COMM inputted from the outside and a reproducing controller for accessing and reproducing the voice data recorded on the memory 18. The following is a detailed explanation relative to the operation of the recording controller and the reproducing controller in the microprocessor 34 .

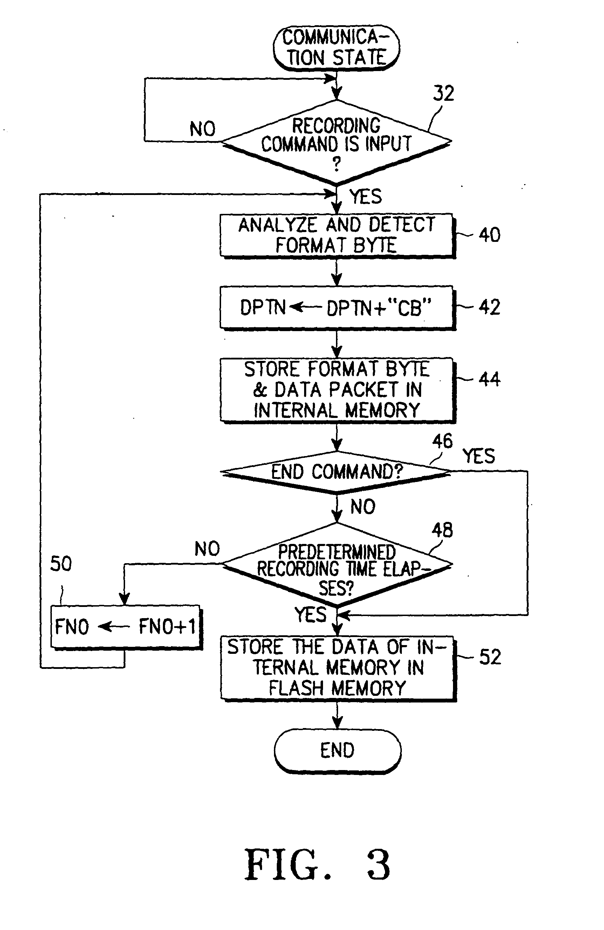

FIG. 3 is a flow chart showing the procedure for recording frame data of the communication channel occupied according to an embodiment of the present invention. In other words, it shows a control procedure of the recording controller in the microprocessor 34 of FIG. 1. Such a control program of the recording controller is masked in the memory 18 of FIG.1.

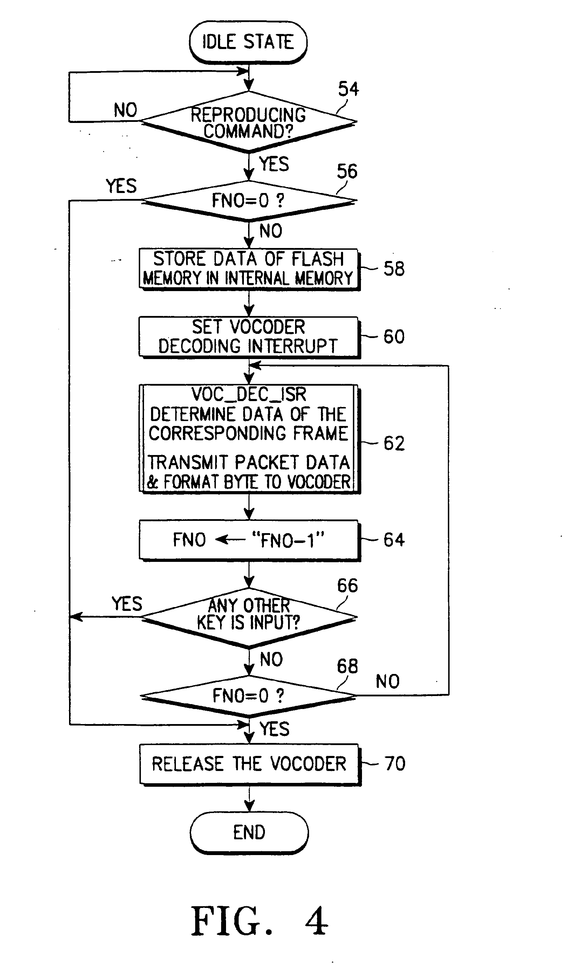

FIG. 4 is a flow chart showing a procedure for decoding packet data of frame data of a communication channel as a voice signal according to an embodiment of the present invention. In other words, it shows a control procedure of the reproducing controller in the microprocessor 34 of FIG. 1. As stated in the above, such a control program of reproducing controller is also masked in the memory 18 of FIG.1.

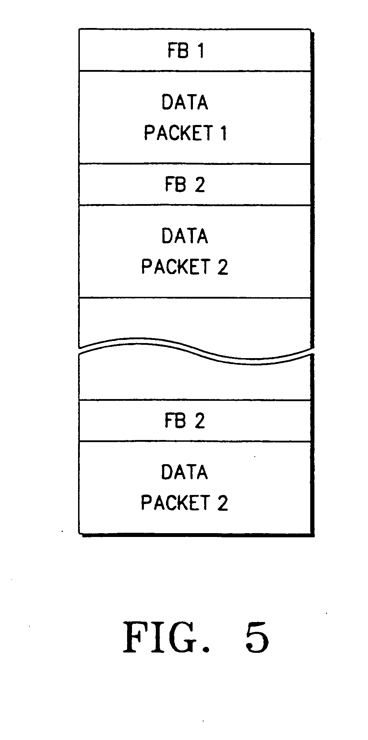

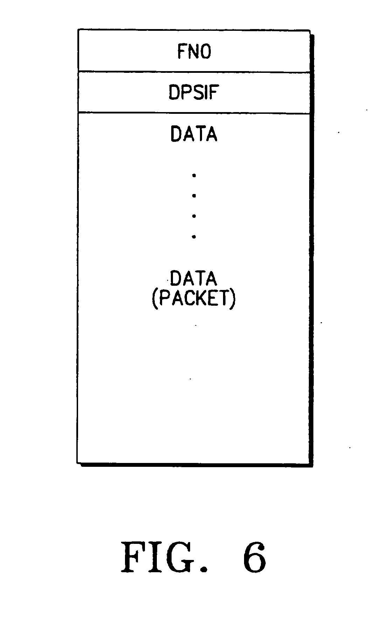

FIGs. 5 and 6 show memory tables according to an embodiment of the present invention. FIG. 5 is a table of an internal memory 36 of the microprocessor 34 of FIG. 1, and FIG. 6 is a table of the memory 18 of FIG.1. Further, the internal memory 36 is preferably a RAM (Random Access Memory) and the memory 18 a flash memory.

Hereinafter a detailed explanation relative to the procedure for recording and reproducing the voice frame data of the forward traffic channel will be given with reference to the FIGs. 3, 4, 5 and 6.

Assume the communication state, i.e. the voice frame data of the forward traffic channel is received and an analog voice signal is reproduced. Then, at step 32 of FIG. 3, the recording controller checks whether the recording command is inputted from the outside or not.

At this time, in order for a user to record voice messages transmitted from the other party, when a user selects a recording key disposed on a key panel of the mobile radio telephone, then a recording command (COMM-R) is inputted to the microprocessor 34. Thus, the recording controller of the microprocessor 34 recognizes the above state as the state that the recording command is inputted at the step 32 and proceeds to step 40. At step 40, the recording controller detects and analyzes the format byte inputted from an information bit stream, at the period of 20 ms, which is error-corrected and output from the deinterleaver and decoder 28.

After analyzing the format byte at the step 40, the recording controller proceeds to step 42. At the step 42, the recording controller stores the current data packet byte number (CB) and the total number of format bytes inputted by the data rate information of the format byte in a data counter buffer (DPTN: data packet total number). Additionally, at step 44, the recording controller stores the detected format byte information and the data packet in an internal memory 36.

According to the above operation, as illustrated in FIG. 5, the format byte FBi (where, i represents an integer number such as 1,2,3, ... n) and the data packet DATA PACKET i is sequentially stored in the internal memory 36 of the microprocessor 34. After storing the voice data frame of the forward traffic channel in the internal memory 36 at step 44, the recording controller proceeds to steps 46 and 48. At step 46, the recording controller checks whether an end command is inputted or not and at the step 48, whether the predetermined recording time elapses or not. Herein, when the end command is not inputted and the predetermined recording time has not elapsed at steps 46 and 48, the recording controller proceeds to step 50. At step 50, the recording controller increases a frame counter FNO established in the internal memory 36 and then, returns to step 40 to thereby repeat the aforesaid operation in a sequential manner.

Accordingly, if the end command (COMM-E) is not entered for a predetermined time after input of the recording command from the outside, then, according to the control sequence of the recording controller of FIG.3, both the format byte of the frame data which is inputted at the period of 20 ms as shown in FIG. 2 and the information bit of the data packet are stored in the internal memory 36 as illustrated in FIG.5. Here, the frame counter (FNO) of FIG. 5 stores the value of the frame number and the data counter buffer (DTPN) stores the value of total byte number of the frame.

To the contrary, if at step 46 the end command (COMM-E) is entered or if the number of bytes relative to the recorded data packet exceeds the predetermined number of bytes, i.e., when it is checked that the predetermined recording time elapses, then the recording controller proceeds to step 52 and accesses all of the information stored in the internal memory 36 such as the frame number information (FNO), accumulated data packet information (DTPN), format byte FBi information and data packet information (DATA PACKET i) to store the information in the flash memory 18 in the form depicted in FIG.6. Thereafter, the recording controller terminates the recording operation. In FIG.6, DPSIF refers to the data packet size information and more particularly, to the information relative to the sum of the format byte (FB i) and the data packet (DATA PACKET i). Herein, the reason that the received voice data of the forward traffic channel is stored in the flash memory 18 is because it allows the recorded voice data to be externally stored even when the power of the mobile radio telephone is turned off.

As stated above, it appears that according to the operation of the recording controller of the microprocessor 34, data rate information of frame data of the forward traffic channel and the corresponding data packet are sequentially stored in the memory 18, wherein the data rate varies based on the voice traffic per unit time.

The voice data of the forward traffic channel stored in the memory 18 is reproduced by the operation of the reproducing controller of the microprocessor 34 as illustrated in FIG.4 and then output as an audible signal. The following shows in detail the procedure of reproducing the voice data by the reproducing controller.

During an idle mode, i.e., when the mobile radio telephone is in the call enable condition, the reproducing controller of the microprocessor 34 proceeds to step 54 of FIG. 4 and checks whether a reproducing command (COMM-P - command play) is inputted from the outside or not. At this time, in order to reproduce the voice message recorded by a user, if the reproducing key of the key panel is selected then the reproducing controller accesses the frame number information (FNO) and the DPSIF information in the memory 18 and checks whether the frame number information (FNO) is "O' or not.

At this time, when checked that the number of frame (FNO) is not "0", the reproducing controller of the microprocessor 34 proceeds to step 58 and reads out the value of the frame counter (FNO) and the data counter buffer (DPSIF). Then, the reproducing controller accesses the format byte and the data packet corresponding to the value of the frame counter FNO and data counter buffer DPSIF in the memory 18 (flash memory) and then stores the accessed one in the internal memory 36. Then, the reproducing controller of the microprocessor 34 proceeds to step 60 and acquires the vocoder 32 to thereby establish a decoding interrupt of the vocoder 32.

Then, the reproducing controller proceeds to step 62 and analyzes the contents of the first frame format byte in the vocoder decoding interrupt service routine (VOC_DEC_ISR). The reproducing controller determines that the size of packet data is 8k or 13k, what the vocoder rate (data rate) is, and whether the frame is a blank frame or an erasure frame and then provides the data packet and the corresponding format byte suitable for the vocoder rate to the vocoder_decoder_ packet register of the vocoder 32. At this time, the vocoder 32 decodes the format byte and data packet of the corresponding frame supplied from the reproducing controller to be suitable for the vocoder rate and then provides PCM voice data sample of the corresponding frame to the codec 20. The codec 20 converts the PCM voice data sample into an analog signal which is then output as an audible sound via the speaker (SP) connected to an output terminal.

Sequentially, the reproducing controller of the microprocessor 34 proceeds to step 64, decreases the value of the frame counter FNO by 1 and proceeds to step 66. In step 66, the reproducing controller checks whether any other key signal (COMM-OT - COMM other key) is input or not. If so, the reproducing controller proceeds to step 70, releases the vocoder 32, interrupts the voice reproducing operation and jumps to the corresponding key signal processing routine.

If, however, it is checked that any other key signal is not input at the step 66, the reproducing controller proceeds to step 68 and checks whether the value of the frame counter FNO established in the internal memory 36 is "0" or not. At this time, if the value of the frame counter FNO is not "0", the reproducing controller repeats the operation of step 62, accesses the next frame format byte and the corresponding data packet in the memory, provides the accessed one to the vocoder, and decreases the value of the frame counter FNO.

Accordingly, the reproducing controller decreases the value of the frame counter recorded in the internal memory and repeatedly performs reproduction operation depending on the frame number read out from the memory. To the contrary, if at step 66 any other key is input, then the reproducing controller terminates the vocoder_decoding_interrupt service routine of the vocoder 32 and simultaneously, at step 70, releases the vocoder 32, to thereby terminate the reproducing operation.

Therefore, the voice data of a plurality of forward traffic channel frames having the vocoder rate varying based on the voice traffic is reproduced by the operation of the reproducing controller having the reproducing control algorithm as shown in FIG.4.

As stated above, the present invention has an advantage in that when the forward traffic channel is received in the digital mobile radio telephone, the data of voice channel frame format which varies based on the voice traffic per unit time, is recorded and reproduced using the vocoder, to thereby prevent an important message from missing upon calling with the other party.

## Claims

1. A mobile radio telephone for use in a radio communication system for recording and reproducing voice messages transmitted from a communicating party via a forward traffic channel, said mobile radio telephone comprising:
a flash memory (18) for storing and outputting received voice channel frames, each comprising a data packet and a format byte containing a vocoder rate of the data packet; and
a microprocessor (34) comprising a recording controller, a reproducing controller and an internal memory (36);
wherein the recording controller (34) is for controlling the storage of said voice channel frames into said flash memory responsive to a recording command (COMM-R) when in a communication mode, said controlling comprising:
analyzing (40) vocoder rate information of said format bytes included in said received voice channel frames;
determining (42) the total amount of information stored;
sequentially storing (44) the format bytes and data packets included in said received voice channel frames in said internal memory, wherein said internal memory further stores frame number information (FNO) concerning the number of stored voice channel frames and information concerning the total number of bytes of data packets stored;
checking (46) whether an end command (COMM-E) is inputted;
checking (48) whether the total number of bytes stored exceeds a predetermined number; and
if the end command is inputted or the total amount of information exceeds the predetermined number, storing (52) in said flash memory all the information stored in the internal memory, starting with said frame number information and data packet size information (DPSIF);
wherein the reproducing controller (34) is for analyzing (62) a format byte stored in said flash memory to determine the vocoder rate among a plurality of vocoder rates, accessing (62) packet data using said frame number information and supplying (62) the accessed data to a decoder responsive to a reproducing command (COMM-P) when in an idle mode; and
wherein the mobile radio telephone further comprises:
the decoder (32) for decoding the data packets according to the vocoder rate and generating a digital voice sample data as output; and
a digital-to-analog converter (20) for converting said digital voice sample data output from said decoder into an analog signal for audible reproduction.

2. The mobile radio telephone as claimed in claim 1, wherein said voice channel frame has a period of 20 ms.

3. The mobile radio telephone as claimed in claim 1, wherein said recording controller is further arranged to terminate the recording operation of the voice messages transmitted from the communicating party when a predetermined recording capacity is exceeded.

4. The mobile radio telephone as claimed in claim 1, further comprising:
a demodulator (26) for demodulating and symbol-combining frame data of said forward traffic channel; and
a deinterleaver and decoder (28) for deinterleaving and decoding said symbol combined frame data, to thereby output an error corrected information bitstream.

5. A method for recording and reproducing voice signals in a mobile radio telephone, said method comprising the steps of:
in response to a recording command (COMM-R) in communication mode:
analyzing (40) vocoder rate information of format bytes included in received voice channel frames;
determining (42) the total amount of information stored;
sequentially storing (44) the format bytes and data packets included in said received voice channel frames in an internal memory (36) of a microprocessor (34) of the telephone, said format byte containing a vocoder rate of the data packets, wherein said internal memory further stores frame number information (FNO) concerning the number of stored voice channel frames and information concerning the total number of bytes of data packets stored;
checking (46) whether an end command (COMM-E) is inputted;
checking (48) whether the total number of bytes stored exceeds a predetermined number; and
if the end command is inputted or the total amount of information stored exceeds the predetermined number, storing (52) in a flash memory (18) of the telephone all the information stored in said internal memory, starting with said frame number information and data packet size information; and
in response to a reproducing command (COMM-P) in said idle mode:
analyzing (62) a stored format byte;
accessing (62) said vocoder rate information;
accessing (62) a data packet using said frame number information;
supplying (62) said data packet to a decoder; and
decoding said data packet in accordance with said vocoder rate and reproducing said decoded data packet as a voice signal.

6. The method as claimed in claim 5, wherein said method is arranged to end the recording operation whenever the total number of data packets accumulated exceeds a predetermined capacity.

7. The method as claimed in claim 5, wherein said method is arranged to end the recording operation whenever the total number of byte accumulated exceeds a predetermined capacity.

8. The method as claimed in the claim 5, wherein said step of analyzing said stored format byte comprises the step of analyzing said stored format byte to determine said vocoder rate.

9. The method as claimed in claim 5, further comprising steps of decreasing (64) said frame number information concerning the number of stored voice channel frames and terminating (70) the reproducing of the data packets when any other key is inputted.

## Patentansprüche

1. Mobilfunktelefon zur Verwendung in einem Funkkommunikationssystem, zum Aufzeichnen und Wiedergeben von Sprachmitteilungen, die von einer Kommunikationsseite über einen Vorwärtsverkehrskanal übertragen werden, wobei das Mobilfunktelefon umfasst:
einen Flash-Speicher (18) zum Speichern und Ausgeben von empfangenen Sprachkanalframes, die jeweils ein Datenpaket und ein eine Vocoderrate des Datenpaketes enthaltendes Formatbyte umfassen; und
einen Mikroprozessor (34), der einen Aufzeichnungskontroller, einen Wiedergabekontroller und einen internen Speicher (36) umfasst;
wobei der Aufzeichnungskontroller (34) ausgelegt ist zum: Steuern der Speicherung der Sprachkanalframes in dem Flash-Speicher in Reaktion auf einen Aufzeichnungsbefehl (COMM-R) in einem Kommunikationsmodus, wobei das Steuern umfasst:
Analysieren (40) von Vocoderrateninformation der in den empfangenen Sprachkanalframes beinhalteten Formatbytes;
Bestimmen (42) der Gesamtmenge an gespeicherter Information;
sequenzielles Speichern (44) der Formatbytes und in den empfangenen Sprachkanalframes beinhalteten Datenpakete in dem internen Speicher, wobei der interne Speicher des Weiteren Frameanzahlinformation (Frame Number Information FNO) hinsichtlich der Anzahl von gespeicherten Sprachkanalframes und Information hinsichtlich der Gesamtanzahl von Bytes von gespeicherten Datenpaketen speichert;
Prüfen (46), ob ein Beendigungsbefehl (COMM-E) eingegeben ist;
Prüfen (48), ob die Gesamtanzahl gespeicherter Bytes eine vorbestimmte Anzahl überschreitet; und
in dem Flash-Speicher erfolgendes Speichern (52) all der in dem internen Speicher gespeicherten Information, beginnend mit der Frameanzahlinformation und Datenpaketgrößeninformation (Data Package Size Information DPSIF), wenn der Beendigungsbefehl eingegeben ist oder die Gesamtmenge an Information die vorbestimmte Anzahl überschreitet;
wobei der Wiedergabekontroller (34) ausgelegt ist zum: Analysieren (62) eines in dem Flash-Speicher gespeicherten Formatbyte, um die Vocoderrate unter einer Mehrzahl von Vocoderraten zu bestimmen, Zugreifen (62) auf Paketdaten unter Verwendung der Frameanzahlinformation und Bereitstellen (62) der Daten, auf die zugegriffen wird, für einen Decoder in Reaktion auf einen Wiedergabebefehl (COMM-P) in einem Leerlaufmodus; und
wobei das Mobilfunktelefon des Weiteren umfasst:
den Decoder (32) zum Decodieren der Datenpakete entsprechend der Vocoderrate und Erzeugen von Digitalsprachabtastdaten als Ausgabe; und
einen Digital-Analog-Wandler (20) zum Umwandeln der digitalen Sprachabtastdatenausgabe aus dem Decoder in ein Analogsignal zur akustischen Wiedergabe.

2. Mobilfunktelefon nach Anspruch 1, wobei der Sprachkanalframe eine Periode von 20 ms aufweist.

3. Mobilfunktelefon nach Anspruch 1, wobei der Aufzeichnungskontroller des Weiteren dafür angeordnet ist, den Aufzeichnungsbetrieb der Sprachmitteilungen, die von der Kommunikationsseite übertragen werden, zu beenden, wenn eine vorbestimmte Aufzeichnungskapazität überschritten wird.

4. Mobilfunktelefon nach Anspruch 1, des Weiteren umfassend:
einen Demodulator (26) zum Demodulieren und Symbolkombinieren von Framedaten des Vorwärtsverkehrskanals; und
einen Entschachteler und Decoder (28) zum Entschachteln und Decodieren der symbolkombinierten Framedaten, um hierdurch einen fehlerberichtigten Informationsbitstrom auszugeben.

5. Verfahren zum Aufzeichnen und Wiedergeben von Sprachsignalen in einem Mobilfunktelefon, wobei das Verfahren die nachfolgenden Schritte umfasst:
in Reaktion auf einen Aufzeichnungsbefehl (CÖMM-R) in einem Kommunikationsmodul erfolgendes:
Analysieren (40) von Vocoderrateninformation von in empfangenen Sprachkanalframes beinhalteten Formatbytes;
Bestimmen (42) der Gesamtmenge an gespeicherter Information;
sequenzielles Speichern (44) der Formatbytes und in den empfangenen Sprachkanalframes beinhalteten Datenpaketen in einem internen Speicher (36) eines Mikroprozessors (34) des Telefons, wobei das Formatbyte eine Vocoderrate der Datenpakete enthält, wobei der interne Speicher des Weiteren Frameanzahlinformation (Frame Number Information FNO) hinsichtlich der Anzahl von gespeicherten Sprachkanalframes und Information hinsichtlich der Gesamtanzahl von Bytes von gespeicherten Datenpaketen speichert; Prüfen (46), ob ein Beendigungsbefehl (COMM-E) eingegeben ist;
Prüfen (48), ob die Gesamtanzahl von gespeicherten Bytes eine vorbestimmte Anzahl überschreitet; und
in einem Flash-Speicher (18) des Telefons erfolgendes Speichern (52) all der in dem internen Speicher gespeicherten Information, beginnend mit der Frameanzahlinformation und Datenpaketgrößeninformation, wenn der Beendigungsbefehl eingegeben ist oder die Gesamtmenge an gespeicherter Information die vorbestimmte Anzahl überschreitet; und
in Reaktion auf einen Wiedergabebefehl (COMM-P) in dem Freilaufmodus erfolgendes:
Analysieren (62) eines gespeicherten Formatbyte;
Zugreifen (62) auf die Vocoderrateninformation; Zugreifen (62) auf ein Datenpaket unter Verwendung der Frameanzahlinformation;
Bereitstellen (62) des Datenpaketes für einen Decoder; und
Decodieren des Datenpaketes in Entsprechung zu der Vocoderrate und
Wiedergeben des decodierten Datenpaketes als Sprachsignal.

6. Verfahren nach Anspruch 5, wobei das Verfahren derart angeordnet ist, dass es den Aufzeichnungsbetrieb immer dann beendet, wenn die Gesamtanzahl von angesammelten Datenpaketen eine vorbestimmte Kapazität überschreitet.

7. Verfahren nach Anspruch 5, wobei das Verfahren dafür angeordnet ist, dass es den Aufzeichnungsbetrieb immer dann beendet, wenn die Gesamtanzahl von angesammelten Bytes eine vorbestimmte Kapazität überschreitet.

8. Verfahren nach Anspruch 5, wobei der Schritt des Analysierens des gespeicherten Formatbyte den Schritt des Analysierens des gespeicherten Formatbyte umfasst, um die Vocoderrate zu bestimmen.

9. Verfahren nach Anspruch 5, des Weiteren umfassend Schritte des Verringerns (64) der Frameanzahlinformation hinsichtlich der Anzahl von gespeicherten Sprachkanalframes und Beenden (70) der Wiedergabe der Datenpakete, wenn ein beliebiger anderer Schlüssel eingegeben wird.

## Revendications

1. Trame de radiotéléphone mobile dans un système de communication radio pour enregistrer et reproduire des messages vocaux transmis depuis une partie communicante via un canal de trafic à liaison aval, ledit radiotéléphone mobile comprenant :
une mémoire flash (18) pour enregistrer et sortir des trames de canal vocal reçues, comprenant chacune un paquet de données et un octet de format contenant un débit de vocodeur du paquet de données ; et
un microprocesseur (34) comprenant un contrôleur d'enregistrement, un contrôleur de reproduction et une mémoire interne (36) ;
dans lequel le contrôleur d'enregistrement (34) permet de contrôler l'enregistrement desdites trames de canal vocal dans ladite mémoire flash en réponse à une commande d'enregistrement (COMM-R) en mode de communication, ledit contrôle comprenant :
l'analyse (40) d'informations de débit de vocodeur desdits octets de format inclus dans lesdites trames de canal vocal reçues ;
la détermination (42) de la quantité totale d'informations enregistrées ;
l'enregistrement séquentiel (44) des octets de format et des paquets de données inclus dans lesdites trames de canal vocal reçues dans ladite mémoire interne, dans lequel ladite mémoire interne enregistre en outre des informations de nombre de trames (FNO) concernant le nombre de trames de canal vocal enregistrées et des informations concernant le nombre total d'octets de paquets de données enregistrés ;
la vérification (46) de l'entrée ou non d'une commande de finalisation (COMM-E) ;
la vérification (48) si le nombre total d'octets enregistrés dépasse ou non un nombre prédéterminé ; et
si la commande de finalisation est entrée ou si la quantité totale d'informations dépasse le nombre prédéterminé, l'enregistrement (52) dans ladite mémoire flash de toutes les informations enregistrées dans la mémoire interne, en commençant par ladite information de nombre de trames et l'information de taille de paquet de données (DPSIF ou Data Packet Size InFormation) ;
dans lequel le contrôleur de reproduction (34) permet d'analyser (62) un octet de format enregistré dans ladite mémoire flash pour déterminer le débit de vocodeur parmi une pluralité de débits de vocodeur, d'accéder (62) aux données du paquet en utilisant ladite information de nombre de trames et de fournir (62) les données accédées à un décodeur en réponse à une commande de reproduction (COMM-P) en mode inactif ; et
dans lequel le radiotéléphone mobile comprend en outre :
le décodeur (32) pour décoder les paquets de données selon le débit de vocodeur et générer en sortie des données d'échantillonnage vocal numérique ; et
un convertisseur numérique-analogique (20) pour convertir ladite sortie de données d'échantillonnage vocal numérique dudit décodeur en un signal analogique pour une reproduction audible.

2. Radiotéléphone mobile selon la revendication 1, dans lequel ladite trame de canal vocal présente une période de 20 ms.

3. Radiotéléphone mobile selon la revendication 1, dans lequel ledit contrôleur d'enregistrement est en outre agencé pour finaliser l'opération d'enregistrement des messages vocaux transmis par la partie communicante lorsqu'une capacité d'enregistrement prédéterminée est dépassée.

4. Radiotéléphone mobile selon la revendication 1, comprenant en outre :
un démodulateur (26) pour démoduler et des données de trame à combinaison de symboles dudit canal de trafic à liaison aval ; et
un désentrelaceur et décodeur (28) pour désentrelacer et décoder lesdites données de trame à combinaison de symboles, pour ainsi sortir un bitstream d'information à correction d'erreur.

5. Procédé pour enregistrer et reproduire des signaux vocaux dans un radiotéléphone mobile, ledit procédé comprenant les étapes consistant à :
en réponse à une commande d'enregistrement (COMM-R) en mode de communication :
analyser (40) des informations de débit de vocodeur d'octets de format inclus dans des trames de canal vocal reçues ;
déterminer (42) la quantité totale d'informations enregistrées ;
enregistrer séquentiellement (44) les octets de format et des paquets de données inclus dans lesdites trames de canal vocal reçues dans une mémoire interne (36) d'un microprocesseur (34) du téléphone, ledit octet de format contenant un débit de vocodeur des paquets de données, dans lequel ladite mémoire interne enregistre en outre des informations de nombre de trames (FNO) concernant le nombre de trames de canal vocal enregistrées et des informations concernant le nombre total d'octets de paquets de données enregistrés ;
vérifier (46) l'entrée ou non d'une commande de finalisation (COMM-E) ;
vérifier (48) si le nombre total d'octets enregistrés dépasse ou non un nombre prédéterminé ; et
si la commande de finalisation est entrée ou si la quantité totale d'informations enregistrées dépasse le nombre prédéterminé, enregistrer (52) dans une mémoire flash (18) du téléphone toutes les informations enregistrées dans ladite mémoire interne, en commençant par ladite information de nombre de trames et l'information de taille de paquet de données ; et
en réponse à une commande de reproduction (COMM-P) dans ledit mode inactif :
analyser (62) un octet de format enregistré ;
accéder (62) audites informations de débit de vocodeur ;
accéder (62) au paquet de données en utilisant lesdites
informations de nombre de trames ;
fournir (62) ledit paquet de données à un décodeur ; et
décoder ledit paquet de données selon ledit débit de vocodeur et reproduire ledit paquet de données décodé comme un signal vocal.

6. Procédé selon la revendication 5, dans lequel ledit procédé est agencé pour finaliser l'opération d'enregistrement lorsque le nombre total de paquets de données accumulés dépasse une capacité prédéterminée.

7. Procédé selon la revendication 5, dans lequel ledit procédé est agencé pour finaliser l'opération d'enregistrement lorsque le nombre total d'octets accumulés dépasse une capacité prédéterminée.

8. Procédé selon la revendication 5, dans lequel ladite étape d'analyse dudit octet de format enregistré comprend l'étape d'analyse dudit octet de format enregistré pour déterminer ledit débit de vocodeur.

9. Procédé selon la revendication 5, comprenant en outre les étapes de réduction (64) desdites informations de nombre de trames concernant le nombre de trames de canal vocal enregistrées et la finalisation (70) de la reproduction des paquets de données lorsqu'une autre clé quelconque est entrée.
